# EUROPEAN PATENT SPECIFICATION

(11) **EP 4 241 557 B1**
(45) Date of publication and mention of the grant of the patent: **25.12.2024**
(21) Application number: 22161016.5
(22) Date of filing: 09.03.2022
(51) Int. Cl.: A01G 13/02, A01G 22/10

(54) **COVER COMPRISING A FILM WEB INTENDED TO BE PLACED ON AN ASPARAGUS BED**
ABDECKUNG MIT EINER FOLIENBAHN ZUM AUFLEGEN AUF EIN SPARGELBEET
BÂCHE COMPRENANT UNE BANDE DE FILM DESTINÉE À ÊTRE PLACÉE SUR UNE BUTTE D'ASPERGES

(43) Date of publication of application: 13.09.2023
(73) Proprietor: Daios, Dimitrios, 54622 Thessaloniki (GR); Böckenhoff, Pauline, 46348 Raesfeld-Erle (DE)
(72) Inventor: Daios, Dimitrios, 54622 Thessaloniki (GR); Böckenhoff, Pauline, 46348 Raesfeld-Erle (DE)
(74) Representative: Weidener, Jörg Michael

(56) References cited:
- EP-A1- 1 350 427
- FR-A1- 2 505 607
- JP-B2- 4 339 759

## Description

The invention relates to the a cover comprising a film web. The cover can be used to be placed on an asparagus bed, wherein in the laid-on state of the cover the underside of the central region of the film web at least partially faces the crown of the asparagus bed and the undersides of the side regions of the film web are provided for at least partial laying on the side surfaces of the asparagus bed. Further, the invention relates to a use of a cover of the aforementioned type for covering an asparagus bed.

Film webs for covering asparagus beds have been known in practice for a long time. Asparagus is a relatively sensitive crop that must be protected during cultivation. In particular, film webs protect the asparagus growing in the asparagus bed from external weather influences such as cold and/or rain. In addition, film webs can accelerate the growth of the asparagus, so that cultivation can also take place in unfavorable geographical locations.

In order to protect the asparagus bed as best as possible from external weather influences, it is known to place the cover directly on the asparagus bed, so that the underside of the film web lies directly on the asparagus bed. On the one hand, this prevents wind from getting into the space between the cover and the asparagus bed, which would have a negative effect on asparagus growth. On the other hand, this protects the cover itself, as unintentional lifting of the cover due to the influence of wind is then avoided.

In order to ensure that the film web is as tight and/or taut as possible against the asparagus bed, it is known in the state of the art to weigh down the film web at the edges. In practice, weighting is known to be achieved by throwing sand or the like on the edge end and/or in the area of the side surfaces of the asparagus bed. To harvest asparagus, the weighting must first be removed from the cover and then the cover lifted at the harvesting point.

Since manually weighting the edges of the cover by throwing weighting material onto the side edges of the cover is time-consuming, it is also known from the state of the art to integrate the weighting material into the cover. For this purpose, the cover has pockets at the edges in which the weighting material is located. During handling - i.e. when the cover is lifted on and off to harvest the asparagus - the weighting material usually remains in the pockets at the edges.

However, the harvesting process itself has proven to be problematic and decidedly labor-intensive. Asparagus usually has a growth rate of 3 to 4 cm per day. When asparagus emerges from the asparagus bed with the asparagus head, the asparagus head bumps against the underside of the overlying cover. This does not hinder asparagus growth, but then leads to the asparagus not growing straight out of the asparagus bed, resulting in crooked asparagus spears. Such asparagus spears are undesirable, however, as their quality and/or commercial class is rated far worse than straight-grown asparagus. Accordingly - to achieve straight asparagus spears - asparagus has to be cut relatively frequently, which is very labor-intensive and ultimately leads to high costs of the asparagus.

JP 4 339 759 B2 discloses a cover film with a fold. The cover film can be placed in a crown and is adapted in a way that the fold unfolds if the cultivated plants grow.

FR 2 505 607 A1 discloses a cover film with integrated seeds.

EP 1 350 427 A1 relates to a cover for an asparagus comb, wherein the cover has an elongated film web whose two longitudinal edges are each folded over on to themselves.

It is now the object of the present invention to remedy this situation.

According to the invention, the aforementioned object is at least substantially solved in a cover according to claim 1.

According to the invention, the film web has a film reservoir with at least one fold, so that when the cover is placed on the asparagus bed, in the at least partially unfolded state of the fold, there is a spacing of the underside of the central region of the film web from the crown, in particular the upper side of the crown of the asparagus bed.

The aforementioned design according to the invention makes it possible to significantly simplify the harvesting process, as the time intervals between the successive harvesting processes can be considerably increased. The film reservoir creates the possibility that the asparagus, after growing out of the crown of the asparagus bed, will touch the underside of the central region of the cover, but will not experience any relevant resistance there due to the film reservoir, i.e. resistance that influences the orientation of the asparagus during growth, but instead the at least one fold of the film reservoir will open up. The asparagus and/or the relevant asparagus spears thus grow straight out of the dam crown, but are nevertheless protected upwards by the cover. In this way, the efficiency of the asparagus harvest can be considerably improved. Depending on the design of the film reservoir, there is an improvement of at least a factor of 2, ultimately up to a factor of 4. This improvement in harvesting efficiency ultimately results from the fact that asparagus only needs to be cut every two to four days, wherein straight asparagus spears of high quality are still harvested. Ultimately, the costs of harvesting and thus the price of the asparagus can also be reduced.

Furthermore, the realization of the film reservoir with at least one fold according to the invention makes it possible that the cover - as before - can also be lifted and put on again mechanically and/or automatically via a corresponding harvesting machine and/or device. Also, the movability of such a device in the longitudinal direction of the asparagus bed is guaranteed without further ado.

In a preferred embodiment, it is provided that the fold extends in the longitudinal and/or transverse direction of the film web. Preferably, the at least one fold of the film reservoir extends in the longitudinal direction of the film web, which in particular runs in the longitudinal direction of the asparagus bed and/or runs parallel to the side and/or longitudinal edges of the film web. Thus, the film reservoir can be provided over the entire length of the asparagus bed, so that a "buffer" and/or "film reservoir" is available for the asparagus growing out of the asparagus bed.

Preferably, it is provided that the fold running in the longitudinal direction of the film web extends over the entire length of the film web. This means that a "film reservoir" is available at every point of the cover over the length of the asparagus bed.

Furthermore, it can be alternatively or additionally provided in particular that the fold running in the transverse direction of the film web extends over the entire width of the film web.

The realization of at least one longitudinal fold, which extends over the entire length of the film web, and/or at least one transverse fold, which extends over the entire width of the film web, can be easily integrated into the production process of the cover in terms of production technology. As a rule, film webs for covers are extruded, wherein the aforementioned pockets are then realized at the edges, if necessary, by corresponding folding and partial welding of the pockets. After extrusion, the folding of the at least one fold of the film reservoir can then also take place before, simultaneously with or after the creation of the pockets.

It is particularly advantageous in the context of the present invention that the fold is arranged on the upper side of the cover in the folded-in state. Thus, the folded-in fold rests on the upper side of the cover after the cover has been arranged on a asparagus bed. This arrangement of the fold on the upper side of the cover has therefore proved to be advantageous, since the growing asparagus pressing on the underside of the film web does not in this case experience any relevant resistance when the fold is unfolded.

Furthermore, the film reservoir preferably has at least two folds running at least substantially parallel to each other in the longitudinal direction of the film web. The folds run at least substantially parallel to the longitudinal edges of the film web and/or the cover. The two aforementioned folds can - but do not have to - be at least substantially identical. In principle, the folds can also be formed differently. The at least two folds can ensure an unfolding of the film reservoir and thus a provided "buffer" at different points of the asparagus bed, which is particularly advantageous with regard to the growing of the asparagus. According to the invention, it has been found that a film reservoir with two smaller folds is easier to unfold than one with only one larger fold. Ultimately, the folds can be arranged on the asparagus bed in such a way that the asparagus head emerging from the crown has to exert as little resistance as possible against the film web in order to unfold the film reservoir.

Preferably, two longitudinal folds and/or folds running in the longitudinal direction of the film web are spaced apart from each other in such a way that the folds are arranged in the area of the transition between the crown and the side surface when the cover is in the applied state. According to the invention, it has been established in tests carried out that an arrangement of the two longitudinally running folds of the aforementioned type can ensure optimum growth of the asparagus, wherein the asparagus can emerge from the asparagus bed in the area of the crown and unfold the folds by pressing lightly on the underside of the film web facing the crown.

In a further preferred embodiment, it is provided that the spacing of the longitudinal folds and/or folds running in the longitudinal direction of the film web is at least 20 cm, is preferably between 30 cm and 60 cm and is in particular 40 cm +/- 10 %. The aforementioned distances are related in particular to the width of the crown of the asparagus bed that is customary in practice. Thus, the crown of the asparagus bed usually has a width of approximately 40 cm. In this context, it is understood that for differently shaped asparagus beds, the spacing of the longitudinal folds can also be taken into account in the manufacture of the cover, so that the two longitudinal folds can be arranged in the area of the transition between the crown and the side surfaces when resting on the asparagus bed.

Alternatively or additionally, the film web preferably comprises a plurality of folds. In particular at least three, preferably between 3 to 15, more preferably 3 to 10, folds are provided. Preferably, at least four, more preferably at least five, folds are provided. The number of folds can depend on the width of the film web and/or different periods to harvest the asparagus.

Preferably, the folds are arranged symmetrically over the width of the film web, in particular with a mirror-symmetry, wherein the mirror axis is the middle axis of the film web.

More preferably, the folds are running substantially parallel to one another in the longitudinal direction of the film web and/or are designed identical. The spacing between two directly adjacent folds can be the same and/or vary over the width of the film web.

Moreover, the spacing between two directly adjacent folds can be between 0.5 cm to 50 cm, preferably between 1 cm to 20 cm. Alternatively or additionally, the folds can be arranged in such a way that they merge at least substantially directly into each other.

Alternatively or additionally, the folds and/or at least one fold can run at least substantially parallel to one another and/or to the transverse direction of the film web. Folds running in transverse direction of the film web can be called transverse folds. Transverse folds can be provided over the length of the film web several times, preferably with substantially equal spacing between two directly adjacent folds. In a further preferred embodiment, the transverse folds can be provided with different spacings between two directly adjacent transverse folds.

Further, at least one fold and/or all folds can comprise at least three fold legs. The fold legs can be arranged in the unfolded-state on top of each other. The width running in transverse direction of the film web and/or the length running in longitudinal direction of the film web of the fold legs of one fold can be the same.

The transverse direction can be orthogonal to the longitudinal direction.

According to the invention, for at least one fold, preferably all folds, at least two fold legs of the fold facing each other, in particular all fold legs of the fold, are preferably firmly connected to each other, preferably welded, via at least one connecting region. The connecting region can be point-shaped and/or an elongated connecting region. Ultimately, the fold is fixed in place via the connecting region.

The realization of the aforementioned connecting regions can also be easily integrated into the production process of manufacturing the cover according to the invention.

In this context, it is understood that a plurality of connecting regions is provided over the length of the fold for fixing and/or securing the film web, wherein the connecting regions are spaced apart from one another. Between the spaced connecting regions there are unfoldable areas of the film reservoir, wherein the fold is not unfoldable in the area of the connecting regions.

The fixing and/or fastening of the film reservoir to the connecting regions has the advantage that an undesired unfolding of the film reservoir can be avoided. The fixing in the connecting regions ensures that the film reservoir is only unfolded when the cover is installed and/or in use - in particular when an asparagus head emerges from the upper side of the asparagus bed and requires an additional "buffer" of the film web material in order to continue growing. Also, after cutting the asparagus at a certain point of the asparagus bed, the connecting regions cause the fold to fall back to its original state when the cover is placed back on the asparagus bed.

In a further preferred embodiment, it is provided that the connecting region extends over at least 50%, preferably over at least 80%, more preferably between 80% to 90%, of the fold width of the fold reservoir. Alternatively or additionally, it can also be provided that the connecting region extends at least substantially over the entire fold width of the film reservoir. Such a connecting region makes it possible, in particular, to ensure that the at least one fold of the fold reservoir can be securely fixed in the connecting region. In addition, connecting regions formed in this way also ensure that the fold, when unfolded by growing asparagus spears, falls back into the original, folded state after harvesting.

The fold width of the fold reservoir is understood to be the width of the fold in the folded state when the fold is resting on the top of the cover. For example, if the fold width is 10 cm, the fold reservoir has in particular a total width of 20 cm when fully unfolded.

In particular, the fold width and/or the width in transverse direction of the film web of at least one fold leg can be between 1 cm to 20 cm, preferably between 3 cm to 10 cm and in particular 5 cm +/- 20%. Therefore, the width of the film web in the unfolded state can be increased in the unfolded regions by at least 2 cm, preferably at least 6 cm, more preferably between 6 cm to 20 cm and in particular 10 cm +/- 40%, for each fold having at least three fold legs and two fold legs that can be unfolded. In particular, the total width of the film web can be increased in the unfolded state in the unfolded regions by at least 10 cm, preferably by at least 20 cm, more preferably at least 60 cm +/- 20% - in particular dependent on the number of folds provided and/or the fold width. Preferably, a film web having 4 folds can have an increased width in the unfolded state in the unfolded regions of 60 cm +/- 20% compared to the folded state. Alternatively or additionally, a film web having 2 folds can have an increased width in the unfolded state in the unfolded regions of 10 cm +/- 20% compared to the folded state.

According to the invention, a plurality of connecting regions is provided over the length of the fold or over the length of the film reservoir as seen in the longitudinal direction of the fold, as explained previously. According to the invention, the connecting regions are at least substantially equally spaced apart from each other. This is particularly advantageous for production reasons, as a continuous, longitudinally stretched film web can thus be produced, preferably in an inline process. However, the distance between the connecting regions can also vary in at least two sections of the film web, in particular depending on the asparagus bed and the asparagus growing therein.

In another preferred embodiment, the distance between adjacent connecting regions is at least 10 cm. In particular, the distance between adjacent connecting regions is between 30 cm and 300 cm and preferably between 50 cm and 200 cm. The spacing of the connecting region can be selected in particular as a function of the asparagus bed and the position of the asparagus bed - which ultimately determines the external weather influences.

According to the invention, the connecting region and/or all connecting regions can comprise at least one welding line. The welding line can be arranged transverse, oblique and/or inclined to the longitudinal direction and/or to the transverse direction. Preferably, the welding line can have an angle of between 5 ° to 80°, more preferably between 10 ° to 70°, to the longitudinal direction of the film web.

Furthermore, the welding line can be designed as a straight line and/or can have a wave and/or an arc shape.

In addition, the welding line of at least one connecting region, preferably of all connecting regions, can be designed continuous, partial and/or dotted over the fold width of the fold. If the welding line is designed as a dotted line, each welding part can have a length of at least 0.5 cm, preferably at least 1 cm, more preferably between 1 to 3 cm. The welding line can be arranged parallel to the transverse direction and/or the longitudinal direction of the film web.

Further, the connecting regions and/or the welding lines can be the same for one film for different folds or can be different to one another. For example, a film web can comprise for one fold an inclined welding line and for another fold having other connecting regions a dotted welding line.

Moreover, a fold end can be formed as a bend and/or transition between two directly adjacent fold legs. A fold can also have a fold start which is located at the other end of the fold leg having the fold end. The fold start can be formed as a fold line. Further, the fold start can be formed as a bend and/or transition between two directly adjacent fold legs.

Furthermore, in another embodiment, it may be provided that the fold ends of at least two directly adjacent longitudinal folds face each other. Alternatively, the fold ends of the longitudinal folds can face away from each other. In a further alternative, the folds can also be arranged next to each other in such a way that both fold ends face a longitudinal edge of the film web.

In particular, the fold starts and/or fold ends can be directed and/or face the same longitudinal edge of the film web or different longitudinal edges. Moreover, two directly adjacent fold starts can face each other or can be arranged in such a way that they are facing away from each other.

In the context of the present invention, the terms "fold end" and "fold start" are to be understood in particular as meaning that each fold can have a fold start and a fold end. The fold start and/or the fold end can be formed as a crease line and/or fold line. The fold starts are in particular at least substantially arranged in a first plane of the film web, which preferably also comprises the longitudinal edges or at least one longitudinal edge. The fold ends can be arranged in a further plane which preferably runs at least substantially parallel to the transverse direction, preferably the first plane and the further plane are aligned parallel to one another. It has to be understood that the aforementioned embodiments refer in particular to the folded state of the film web.

Preferably, a fold line is provided at the fold end of a fold. Such a fold line facilitates the folding back of an unfolded fold into the folded state.

Furthermore, in another preferred embodiment, it is provided that the width of the fold is at least 2 cm, preferably between 3 cm to 30 cm, more preferably between 5 cm to 20 cm. According to the invention, the width of the fold is understood to be in particular the width of the fold in the folded state, when the fold rests on the main side of the film web, which is usually the upper side. In the case of a three-leg fold, each leg of the fold has the aforementioned width. In the unfolded state, this results in a total width that corresponds to three times the leg width and/or an increase of twice the fold leg width.

Finally, the width of the fold makes it possible to increase the distance between the crown and the film web by the width of the fold, so that in particular the asparagus can emerge from the asparagus bed by at least the width of the fold. Consequently, the asparagus can emerge from the crown of the asparagus bed by at least 2 cm, preferably between 5 cm and 20 cm, without the asparagus head experiencing any relevant resistance from the film web.

Alternatively or additionally, it may be provided that the film reservoir is formed such that the spacing from the bottom of the central region of the film web to the top of the crown can be increased by at least 2 cm, preferably between 5 cm to 20 cm, by unfolding the film web. The increase in spacing across the film reservoir can be achieved in particular by unfolding all folds of the film reservoir. In addition, the widths of the individual folds of the film reservoir can differ from each other in the unfolded state or be at least substantially the same.

In another preferred embodiment of the invention, it is provided that the fold or at least one fold is formed at least as a double fold with two fold sections. Preferably, the ends of the fold sections point in opposite directions. Alternatively or additionally, it can also be provided that the fold sections are folded over each other, wherein the ends of the fold sections can be arranged at least substantially over each other. The formation of the fold as a double fold makes it possible in particular to increase the width of the unfolded fold, especially in comparison to a "single fold" (i.e. a fold with a fold section having two fold legs). The film web can comprise a plurality of double folds, which are preferably spaced apart from each other and/or which are preferably identically formed.

Preferably, the width of the cover with folded-in film reservoir is at least 1.0 m, preferably between 1.1 m to 3.0 m, further preferably between 1.4 m to 1.6 m. The width of the film web can in particular depend on the asparagus bed, in particular such that the film web can be applied at least substantially over the entire surface of the side surfaces and over the crown of the asparagus bed. As a result, the film web can at least substantially completely surround and/or protect the asparagus bed.

The length of the cover is at least 30 m. In particular, the length of the cover can be provided depending on the length of the asparagus bed. As a rule, however, asparagus covers of the type according to the invention have predetermined lengths, for example of 50 m or a multiple thereof. The length of the cover depends essentially on how a cover can be rolled up and how large the diameter of the roll may be for handling purposes. Ultimately, however, it is not uncommon, for example in the case of very long dams, that a plurality of covers is used, wherein these then overlap towards the end.

In a further advantageous embodiment of the invention, the film web is preferably folded over on itself along both of its longitudinal edges, the folded-over areas each forming pockets that can be filled with filling material. In particular, the pockets that can be filled with filling material can be formed between two, in particular T-shaped, joints and/or welds.

Preferably, the pockets are also only filled with water and/or sand or soil as filling material when they are placed on the asparagus bed.

In particular, the pockets according to the invention allow for a simple weighting of the cover when it is placed on the asparagus bed. In this way, it can be prevented that the film web "flies away" and/or slips in the case of strong wind.

The connections for forming the individual pockets have in particular one part running at least substantially transversely and another part running at least substantially in the longitudinal direction of the film web, the part aligned transversely to the longitudinal direction merging in particular at least substantially directly into the part running in the longitudinal direction, in particular so that a T-shaped joint is formed. Preferably, the upper part of the T-shaped joint - i.e. the part of the joint running in the longitudinal direction of the film web - faces the central region of the film web.

The top side of the film web may be white or at least substantially white, while the underside may alternatively or additionally be black, green, grey and/or dark grey and/or dark and/or brown or vice versa. In particular, the white (top) side is configured to provide a reflective surface for sunlight, while the dark, grey, dark grey, green, brown and/or black (bottom) side is configured to provide absorption of sunlight. To achieve the respective coloration, additives, color pigments or the like can be added to the corresponding surfaces of the film web. An additional coating of the top side or the underside of the film web can also be ensured.

Particular preferably, the film web can be used in such a way that the film web can be turned to the desired side in each case, in particular depending on the weather conditions. Accordingly, at least one side is formed as a white or at least substantially white side, which can ultimately form the top side or the underside in the state of use. In particular, the folds are formed in such a way that in the state of use a reversibility of the film web can be ensured without further ado, so that the film web can flexibly adapt to different weather conditions. Of course, the grey, dark grey, black, brown, green and/or dark side can also form the underside or the top side, depending on the state of use.

Further preferably, the film web has both a reflective side (i.e. a white or at least substantially white side) and an absorbent side (i.e. a black, grey, dark grey, green, brown and/or dark side). Alternatively, however, it may also be provided that at least only at least one side, which in the state of use may in particular form both, the underside and the top side, is reflective or absorbent.

That the reflective side forms the top side of the film web is preferably, particular during warmer periods, so that the area covered by the film does not heat up unnecessarily. On the other hand it is particularly preferred that the absorbent side forms the top side in the state of use when there is a colder weather period, i.e. in autumn, winter or spring. Then, solar radiation can be deliberately used to heat the covered area, after which optimization of the harvesting can be achieved.

In particular, the unfolding behavior of the film reservoir according to the invention can be achieved in any state of use - especially regardless of whether the absorbent or the reflective side of the film web forms the top side in the state of use.

The invention also relates to a use of a cover according to at least one of the aforementioned types for covering and/or placing on an asparagus bed.

With regard to preferred embodiment and/or advantages reference can be made to the above explanations which can apply in the same way to the use according to the invention without further explanation.

Further features, advantages and possible applications of the present invention will be apparent from the following description of examples of embodiments based on the drawing and the drawing itself. In this context, all the features described and/or illustrated constitute the subject-matter of the present invention, either individually or in any combination, irrespective of their summary in the claims and their correlation.

It shows:
- Fig. 1: a schematic perspective view of a cover according to the invention when placed on the asparagus bed,
- Fig. 2: a schematic cross-sectional view of a film web according to the invention,
- Fig. 3: a schematic cross-sectional view of a further embodiment of a film web according to the invention,
- Fig. 4: a schematic cross-sectional view of a further embodiment of a film web according to the invention,
- Fig. 5: a schematic cross-sectional view of a further embodiment of a film web according to the invention,
- Fig. 6: a schematic cross-sectional view of a further embodiment of a film web according to the invention,
- Fig. 7: a schematic top view of a further embodiment of a film web according to the invention,
- Fig. 8: a schematic top view of a further embodiment of a film web according to the invention,
- Fig. 9: a schematic perspective view of a further embodiment of a cover according to the invention in the state in which it is placed on the asparagus bed,
- Fig. 10: a schematic perspective view of a further embodiment of a cover according to the invention in the state of being placed on the asparagus bed.
- Fig. 11: a schematic cross-sectional view of a further embodiment of a film web according to the invention,
- Fig. 12: a schematic cross-sectional view of a further embodiment of a film web according to the invention,
- Fig. 13: a schematic cross-sectional view of a connecting region,
- Fig. 14: a schematic cross-sectional view of a further embodiment of a connecting region,
- Fig. 15: a schematic cross-sectional view of a further embodiment of a connecting region,
- Fig. 16A: a schematic top view of a further embodiment of a film web according to the invention,
- Fig. 16B: a schematic top view of a detail shown in Fig. 16A,
- Fig. 17: a schematic top view of a further embodiment of a film web according to the invention,
- Fig. 18: a schematic top view of a further embodiment of a film web according to the invention,
- Fig. 19: a schematic top view of a further embodiment of a film web according to the invention,
- Fig. 20: a schematic cross-sectional view of a further embodiment of a film web according to the invention and
- Fig. 21: a schematic cross-sectional view of a further embodiment of a film web according to the invention.

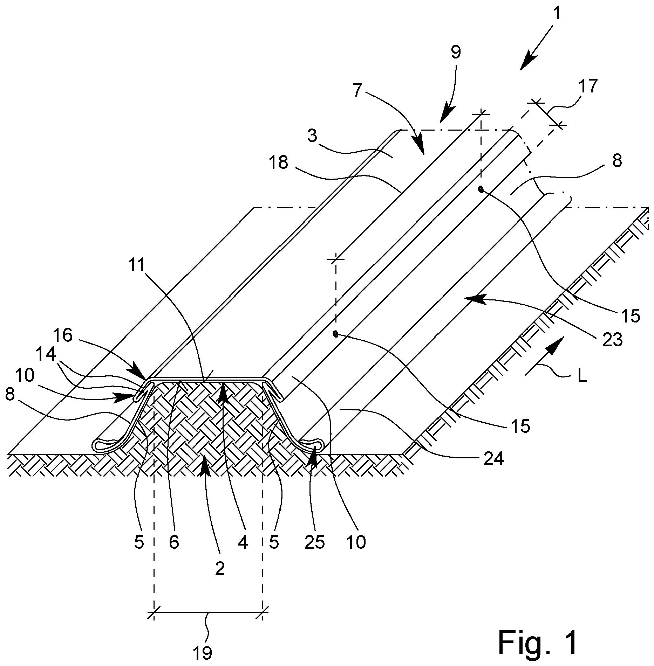

Fig. 1 schematically shows a cover 1 which is placed on an asparagus bed 2. The cover 1 is only intended to be used for placing on the asparagus bed 2.

The cover 1 has a film web 3. Ultimately, the cover 1 has been manufactured from the film web 3. It is explicitly pointed out that the film web 3 is a thin plastic film. The proportions of the thickness of the film web 3 in comparison to the asparagus bed 2 are not correctly shown in Fig. 1. In fact, the thickness of the film web 3 is many times smaller compared to the shown ratios of the asparagus bed 2.

The asparagus bed 2 comprises a crown 4 and side surfaces 5 adjoining the crown 4.

When the cover 1 is in place, the underside 6 of the film web 3 is placed on the asparagus bed 2. The film web 3 has a central region 7 and side regions 8. The central region 7 is arranged between the side regions 8 of the film web 3. The side regions 8 of the film web 3 are used to rest on the side surfaces 5 of the asparagus bed 2. The central region 7 of the film web 3 is placed on the crown 4 of the asparagus bed 2. The underside 6 of the central region 7 is at least essentially facing the crown 4 of the asparagus bed 2.

Fig. 1 further shows that the film web 3 has a film reservoir 9 with at least one fold 10. In the embodiment example shown in Fig. 1, two folds 10 are provided. The aforementioned condition that the underside 6 of the central region 7 is facing the crown of the asparagus bed 2 refers to the folded-in condition of the film reservoir 9 and/or the folds 10. It is understood that in the unfolded condition, in any case, areas of the fold reservoir do not have to be directly facing the crown 4.

The film reservoir 9 is designed in such a way that, when the cover 1 is placed on the asparagus bed 2, in the at least partially unfolded state of the at least one fold 10, there is a spacing of the underside 6 of the central region 7 of the film web 3 from the crown 4, in particular the upper side 11 of the crown 4.

Moreover, as can be seen in particular from Fig. 1, the folds 10 are folded onto the upper side of the cover 1. This facilitates the unfolding of the folds 10 by the growing asparagus spears acting on the underside of the cover 1.

The unfolded state of the film reservoir 9 is understood to mean that the at least one fold 10 of the film reservoir 9 has at least partially unfolded and/or unfolded. The unfolding of the film reservoir 9 may depend on how far the asparagus spears 12 growing in the asparagus bed 2 have emerged from the crown 4.

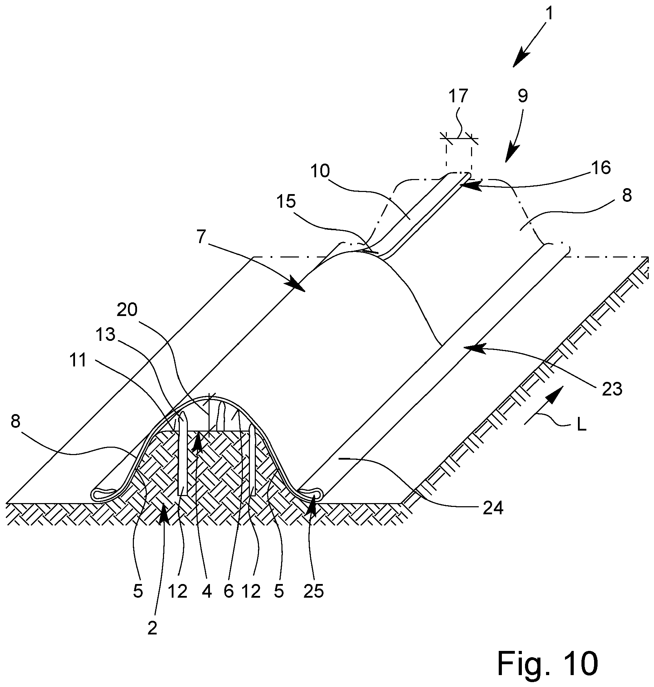

Fig. 10 shows schematically that the asparagus heads 13 emerge from the crown 4 or the upper side 11 of the crown 4 and thus lead to the unfolding of the fold 10. It can be provided that the fold 10 can unfold in dependence of the exit of the asparagus head 13 from the asparagus bed 2. Thus, in particular, there does not have to be an "immediate" transition from the folded-in to the unfolded state of the film reservoir 9, but the unfolding of the film reservoir 9 can be adapted in particular to the growth rate of the asparagus spears 12.

Finally, the film reservoir 9 is designed to provide a reservoir and/or buffer of material of the film web 3 that can be unfolded or unfolded depending on the growth of the asparagus spears 12 and the emergence of the asparagus heads 13 from the upper side 11 of the crown 4. The provided buffer material of the film web 3 can allow a straight growth of the white asparagus spears 12, as the asparagus heads 13 do not have to grow transversely or curved. The pressure exerted on the underside 6 of the central region 7 of the film web 3 triggers the unfolding of the film reservoir 9.

Fig. 1 shows that the folds 10 run in the longitudinal direction L of the film web 3.

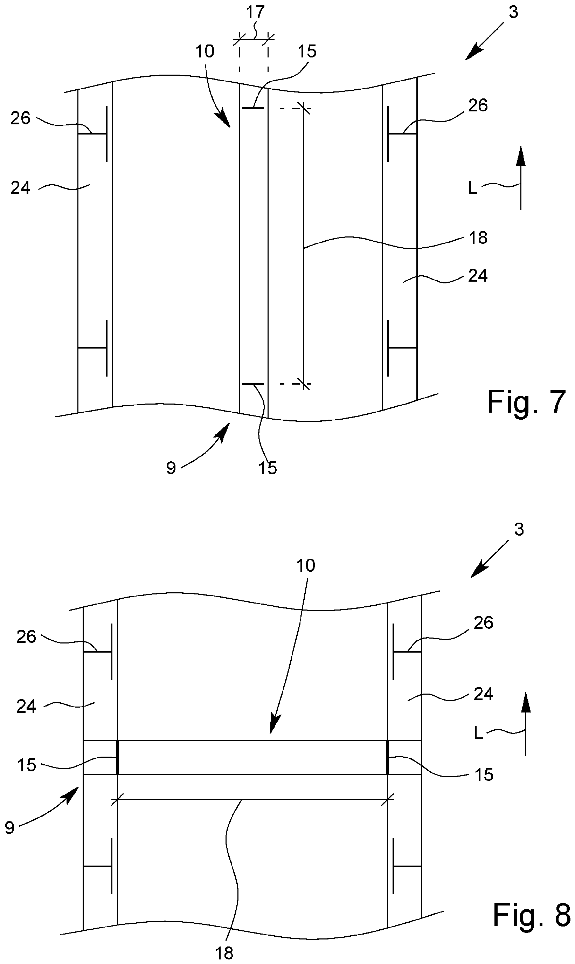

Fig. 7 and Fig. 8 each show a schematic top view of the film web 3, with differently formed folds 10 being shown schematically in Fig. 7 and Fig. 8. In Fig. 7, the fold 10 runs in the longitudinal direction L of the film web 3. In Fig. 8, a further embodiment is shown in which the fold 10 runs at least essentially transversely to the longitudinal direction L of the film web 3, namely in particular in the transverse direction T of the film web 3.

In the state in which the film web 3 shown in Fig. 8 is placed on the asparagus bed 2, the fold 10 can thus run in particular transversely to the longitudinal direction of the asparagus bed 2.

Fig. 7 shows schematically that the fold 10 running in the longitudinal direction L of the film web 3 extends at least substantially over the entire length of the film web 3.

Fig. 8 shows schematically that the fold 10 running transversely to the longitudinal direction L of the film web 3 and/or the fold 10 running in the transverse direction T of the film web 3 extends over the entire width of the film web 3.

It is not shown that folds 10 running in transverse direction T of the film web 3 can be provided over the length of the film web 3 several times, preferably with a substantially equal spacing between two directly adjacent folds 10. In a further preferred embodiment, the transverse folds 10 can be provided with different spacings between two directly adjacent transverse folds 10.

Fig. 1 shows schematically that the film reservoir 9 has at least two folds 10 running at least substantially parallel to each other in the longitudinal direction L of the film web 3. The folds 10 can be at least substantially identical or symmetrical to each other. In further embodiments, different folds 10 of a film reservoir 9 can also be provided.

The folds 10 shown in Fig. 1 and running in the longitudinal direction L of the film web 3 are spaced apart from each other in such a way that the folds 10 are arranged in the area of the transition between the crown 4 and the side surfaces 5 when the cover 1 is in the applied state. In the embodiment shown in Fig. 1, the fold 10 is arranged at least substantially completely at the side region 8 in the area of the transition to the crown 4.

Also not shown is that the spacing 19 between the longitudinal folds 10 or between two directly adjacent folds 10 is at least 20 cm. In particular, the spacing 19 is between 30 cm to 60 cm. In particular, the spacing 19 can correspond at least substantially to the width of the crown 4. The two longitudinal folds 10 can thus be spaced apart by the spacing 19 corresponding to the width of the crown 4.

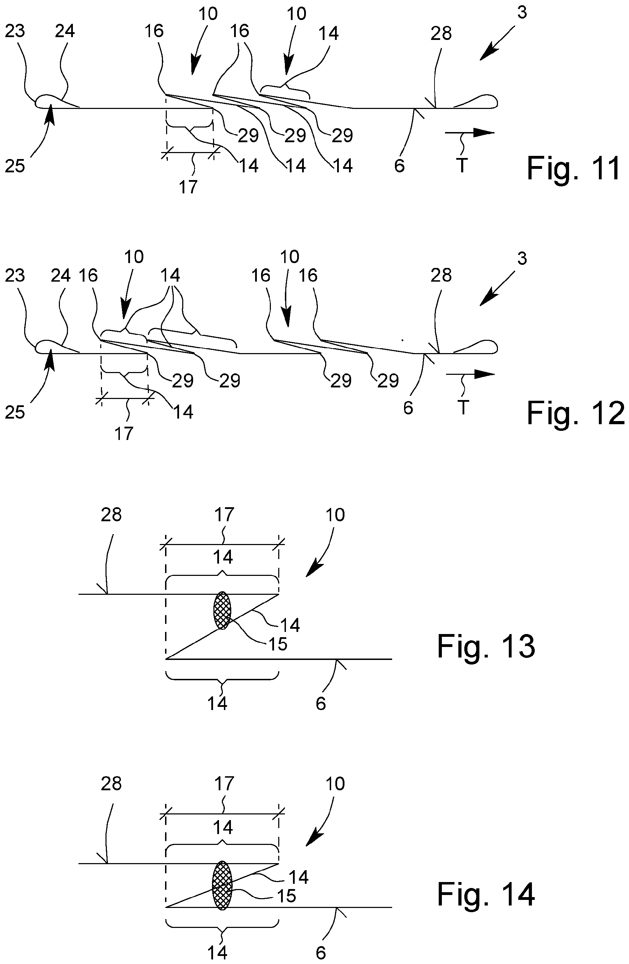

Fig. 11 shows that a plurality of folds 10 is provided. The folds 10 merge directly into each other.

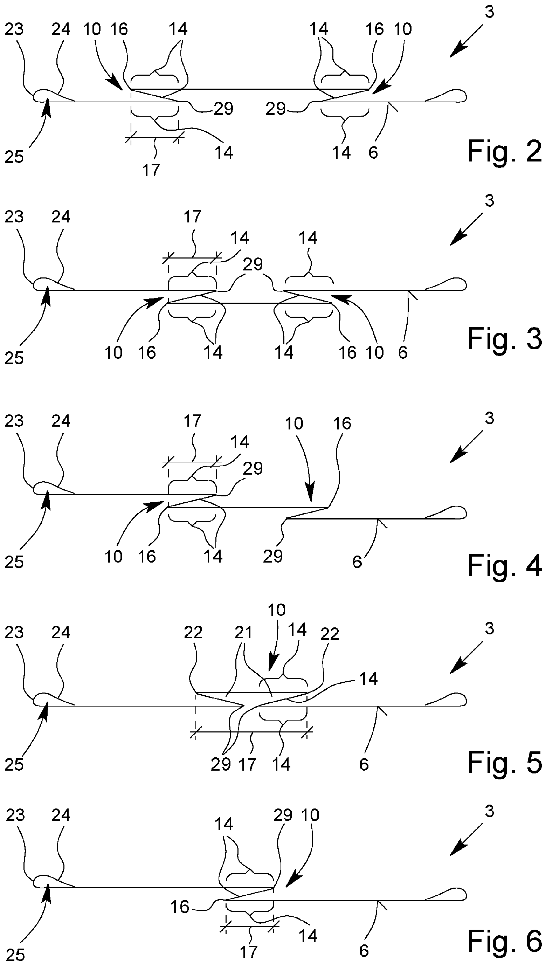

Fig. 2 shows that the plurality of folds 10 can be arranged symmetrical with regard to the transverse direction T over the fold width 17. Furthermore, the folds 10 are arranged in the embodiment example according to Fig. 2 in such a way that they have a mirror-symmetry, wherein the mirror axis is the middle axis of the film web 3.

Fig. 12 shows that the spacing between two directly adjacent folds can vary over the width of the film web 3 and/or in transverse direction T. Thus, two directly adjacent folds 10 can be spaced apart from one another.

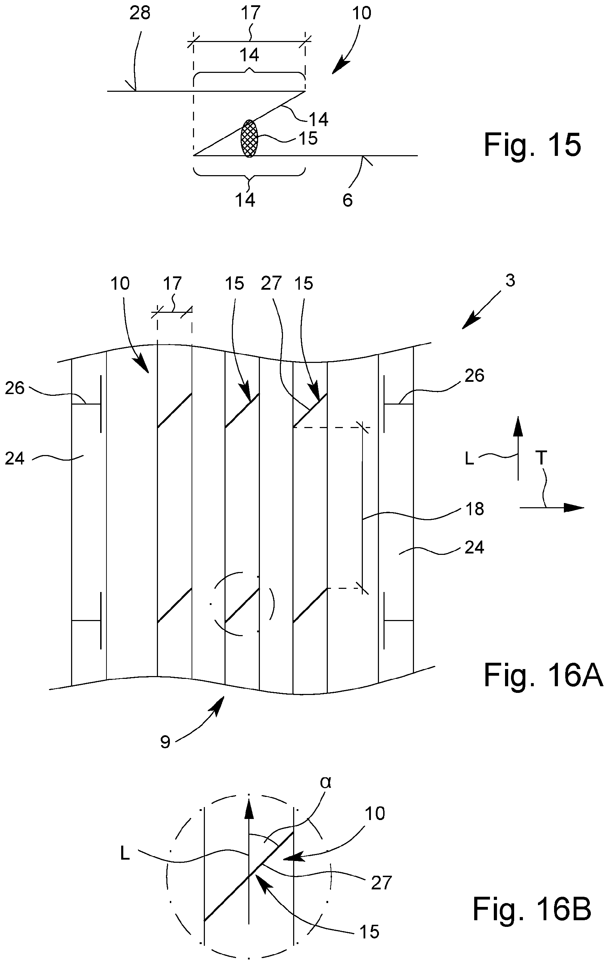

The three folds 10 shown in Fig. 16A run at least substantially parallel to one another in the longitudinal direction L of the film web 3.

The film web 3 can comprise between three to ten folds 10.

Fig. 11 shows that a fold 10 comprises three fold legs 14, wherein the fold legs 14 are arranged on top of each other in the unfolded state. The fold legs 14 of one fold 10 can have the same width (in transverse direction T of the film web 3) and/or length (in longitudinal direction L of the film web 3).

The fold legs 14 can be arranged in the unfolded state in such a way that the fold end 16 is arranged in the folded-state on the underside 6, as shown in Fig. 13, or on the top side 28 of the film web 3 as shown in Fig. 11. A fold 10 that has a fold end 16 arranged on the top side 28 of the film web 3 facing away from the crown 4 can be described as a forward fold 10, wherein a fold 10 that has a fold end 16 arranged on the underside 6 of the film web 3 can be described as a backward fold 10. Each fold 10 can in particular be designed either as a backward or forward fold 10. Also, one film web 3 can comprise only forward folds 10, as shown in Fig. 11, or only backward folds 10. However, it is also possible that a film web 3 comprises forward as well as backward folds 10.

A fold 10 can in particular comprise a fold end 16 and a fold start 29. The fold start 29 and/or the fold end 16 can be formed as a crease line and/or fold lone. Fig. 2 shows that the fold starts 29 in the folded state are arranged at least substantially in a first plane which preferably includes at least one longitudinal edge 23. The fold ends 16 are arranged in the folded state in Fig. 2 in a further place which is in particular parallel to the transverse direction T and/or the first plane.

Fig. 4 shows that the fold ends 16 are arranged in a further plane, wherein the fold starts 29 are arranged in different planes. In particular the film web 3 comprises at least one plane for the fold starts 29 and/or the fold ends 16.

Fig. 1 shows that the fold legs 14 of the fold 10 facing each other are firmly connected to each other, preferably welded, via at least one connecting region 15. The connecting region 15 can have different shapes and in particular be elongated or circular. In the case of an elongated design of the connecting region 15, it is provided in particular that the connecting region 15 preferably extends at least substantially transversely to the longitudinal direction L of the film web 3.

Fig. 1 schematically shows at least essentially point-shaped and/or circular connecting regions 15.

Fig. 1 also shows a plurality of connecting regions 15, wherein the region of the film reservoir 9 provided between the connecting regions 15 can be unfolded.

In Fig. 7 and Fig. 8, at least substantially elongated connecting regions 15, in particular welds, and/or fixings are provided.

The fold 10 can be prevented from being unfolded in the area of the connecting region 15 by means of the connecting regions 15. Thus, a fixation of the fold 10 is provided at least in sections, preferably running in the longitudinal direction L of the film web 3. In this way, it can be made possible to avoid an undesired and/or unintentional unfolding of the fold 10 and/or of the film reservoir 9. In particular, unfolding of the fold 10 should only be caused by the asparagus heads 13 emerging from the crown 4. Finally, the connecting regions 15 also ensure that a crease unfolded by the growth of the asparagus folds in again after the asparagus has been harvested and the cover 1 has been replaced.

In this context, it is particularly useful if the fold 10 has a fold line, in particular one provided during manufacture, which enables the fold to easily return to its original folded state. The fold line is always provided between adjacent fold legs 14.

In the different embodiments according to Fig. 2 to Fig. 4, it is provided that the fold 10 has at least three fold legs 14 and further comprises a fold end 16. The end of the fold can be designed as a fold line realized in terms of production technology. The fold end 16 can be formed as a bend and/or transition between two directly adjacent fold legs 14. Furthermore, a fold 10 can also have a fold start 29 which is located at the other end of the fold leg 14 having the fold end 16. The fold start 29 can be formed as a fold line. Furthermore, the fold start 29 can be formed as a bend and/or transition between two directly adjacent fold legs 14.

The fold legs 14 which are arranged on the top side 28 or underside 6 of the film web 3 can merge into other parts of the film web 3. The width of each fold leg 14 can be defined by the fold width 17 and/or or the width of the fold leg 14 which is located between the outer fold legs 14 and/or those fold legs 14 which are on the underside 6 or top side 28.

In further embodiments not shown, the fold 10 may also have four or more fold legs 14, in particular wherein the fold legs 14 may be folded on top of each other or side by side.

Fig. 7 schematically shows that the connecting region 15 extends at least substantially over 50% of the fold width 17. Ultimately, the connecting region 15 extends at least wide enough over the fold width 17 to prevent unwanted unfolding of the fold 10. However, the fold width 17 can also correspond to the width of a fold leg 14. The fold width 17 refers to the folded-in state of the fold 10 or of the film reservoir 9 in the lying state of the fold 10.

Fig. 7 further shows schematically that a plurality of equally spaced connecting regions 15 are provided along the length of the fold 10. Thus, the areas of the film web 3 formed between the connecting regions 15 can in particular be of at least substantially the same length.

Not shown is that the spacing 18 between adjacent connecting regions 15 can be at least 10 cm, in particular between 50 cm to 200 cm.

Figs. 13 to 15 show that the connecting region 15 can connect firmly at least two fold legs 14 together which are facing each other. Fig. 13 shows that the connecting region 15 is arranged between the upper fold leg 14 which is located on the top side 28 and the middle fold leg 14. Fig. 14 shows that the connecting region 15 connects firmly all fold legs 14 of the fold 10. Further, Fig. 14 shows that the connecting region 15 connects firmly the lower fold leg 14 which is arranged on the underside 6 with the middle fold leg 14.

The connecting region 15 can comprise a welding line 27, which is schematically shown in Fig. 16 A and Fig. 16B, wherein Fig. 16B represents the detail highlighted in Fig. 16A.

Further, Fig. 16A shows that the welding line 27 is arranged transverse, oblique and/or inclined to the longitudinal direction L and to the transverse direction T. Fig. 16B illustrates that the welding line 27 encloses an angle α to the longitudinal direction L of the film web 3. The angle α can be between 5 ° to 80°, more preferably between 10 ° to 70°. In Fig. 16B the angle α is approximately 45° +/- 5°.

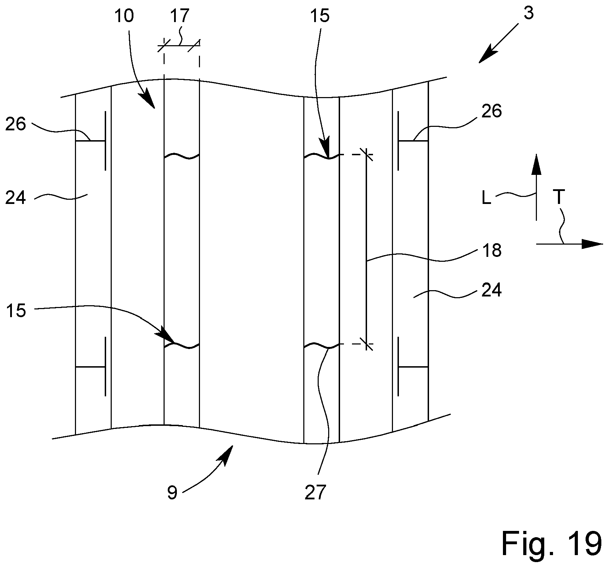

Fig. 19 shows that the welding line 27 has a wave shape. It is not shown that the welding line 27 can have an arc shape.

The welding line 27 shown in Fig. 16A and Fig. 19 is continuous over the fold width 17. Therefore, the welding line 27 also extends over the whole width of the fold legs 14.

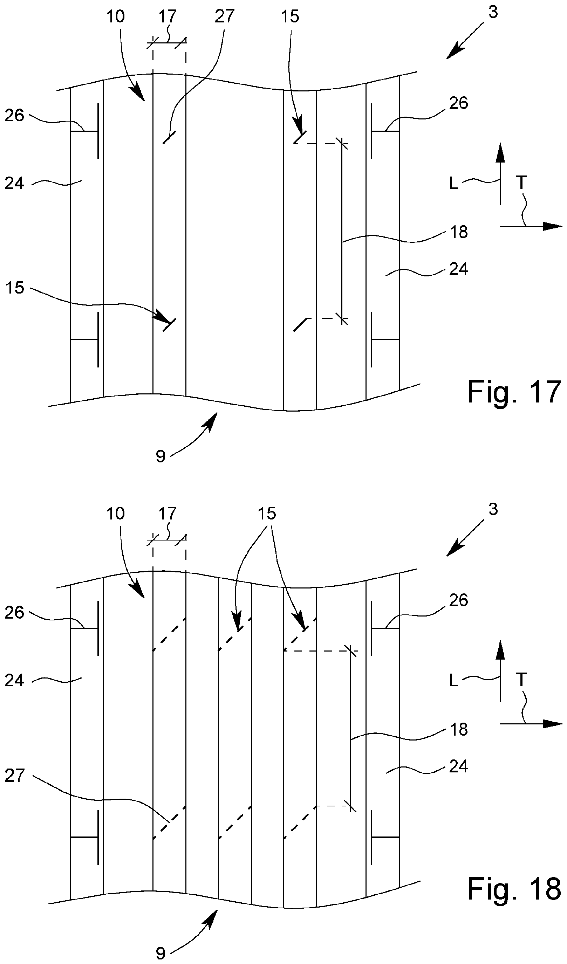

Alternatively or additionally, the welding line 27 can be partial as shown in Fig. 17. A partial welding line 27 does not extend over the whole fold width 17. The welding line 27 can be in particular arranged at least substantially in the middle of the fold 10.

Further, Fig. 18 shows that the welding line 27 is dotted and extends as a non-continuous line over the whole fold width 17.

It is not shown that for different fold 10 different connecting regions 15 in particular with different forms of welding lines 27 can be provided. The different connecting regions 15 and/or welding lines 27 for one film web 3 can follow a predetermined pattern or are arranged randomly.

In Fig. 2 to Fig. 5, different folds 10 are shown schematically.

Fig. 2 shows that the fold ends 16 of the two directly adjacent longitudinal folds 10 face away from each other. This corresponds to the embodiment of the folds 10 shown in Fig. 1.

Further, the fold starts 29 can be directed and/or face the same longitudinal edge 23 of the film web 3 or different longitudinal edges 23. Moreover, two directly adjacent fold starts 29 can face each other or can be arranged in such a way that they are facing away from each other.

Fig. 3 shows a further embodiment in which the fold ends 16 face each other. Thus, the folds 10 can be formed in mirror-symmetry to each other, in particular with the mirror axis running at least substantially transversely to the width of the film web 3 and in particular in the longitudinal direction L of the film web 3.

Fig. 4 shows an at least substantially similar configuration of the folds 10, in which the fold ends 16 face a longitudinal edge 23 - namely the same longitudinal edge 23 of the film web 3.

Fig. 5 shows that the fold 10 is formed as a double fold with two fold sections 21. Furthermore, Fig. 5 shows that the ends 22 of the fold sections 21 point in opposite directions. In particular, a T-shaped free space is enclosed by the double fold.

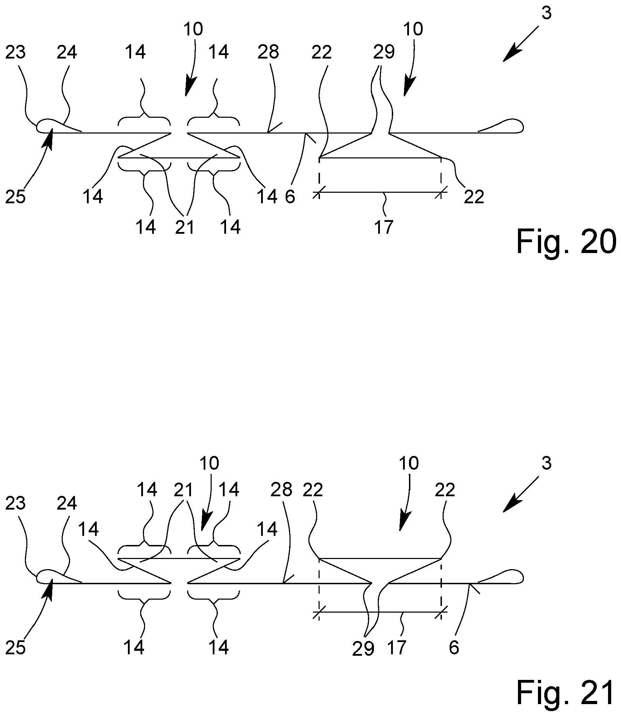

Fig. 20 and Fig. 21 show that the film web 3 can comprise several double folds 10 having each two fold sections 21 and two section ends 22 corresponding to fold ends 16 and two fold starts 29 or section starts 29. Fig. 20 shows that the sections ends 22 can be placed in the folded state on the underside 6, wherein Fig. 21 shows that the section ends 22 can be placed on the top side 28. The double folds 10 can be spaced apart from each other in particular with a distance of at least 5 cm, preferably between 5 to 50cm, in particular 10 to 20 cm.

The folds 10 shown in Figs. 2 to 4 enclose an at least substantially (as seen in crosssection) slit-shaped, unfoldable free space.

Fig. 6 shows a further embodiment in which a fold 10 is used, which is arranged in particular in the central region 7 of the film web 3.

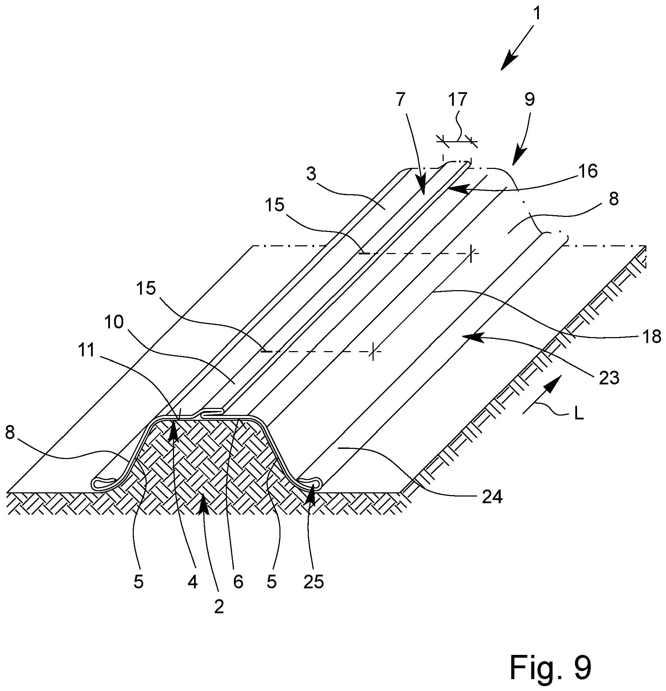

Fig. 9 shows the schematic embodiment of a film web 3 shown in Fig. 6 in the state of use. The fold 10 is arranged in particular at least substantially in the center of the central region 7 and in particular at least substantially in the center of the crown 4.

Fig. 10 shows the cover 1 shown in Fig. 9 with the film reservoir 9 at least partially unfolded.

In addition, Fig. 10 shows a further section of the film web 3 which, in particular, is not unfolded, for example because the asparagus heads 13 have not yet emerged from the crown 4 there. The rear (unfolded) section is spaced from the front section by the connecting region 15, so that the unfolding of the front section due to the connecting region 15 has at least essentially no influence on the rear section. The individual sections of the film web 3 can thus unfold or unfold at least substantially independently of each other.

Fig. 10 shows schematically that the width 20 of the fold 10 is at least 2 cm. The width 20 of the fold 10 can also correspond to the width of the film reservoir 9 in the unfolded state and thus in particular indicate the distance from the upper side 11 of the crown 4 to the underside 6 of the film web 3 or be related to this distance.

It is not shown that the fold width 17 and/or the width in transverse direction T of the film web 3 of at least one fold leg 14 can be between 1 cm to 20 cm, preferably between 3 cm to 10 cm and in particular 5 cm +/- 20%. Therefore, the width of the film web 3 in the unfolded state can be increased in the unfolded regions by at least 2 cm, preferably at least 6 cm, more preferably between 6 cm to 20 cm and in particular 10 cm +/- 40%, for each fold 10 having at least three fold legs 14 and two fold legs 14 that can be unfolded. In particular, the total width of the film web 3 can be increased in the unfolded state in the unfolded regions by at least 10 cm, preferably by at least 20 cm, more preferably at least 60 cm +/- 20% - in particular dependent on the number of folds 10 provided and/or the fold width 17. Preferably, a film web 3 having four folds 10 can have an increased width in the unfolded state in the unfolded regions of 60 cm +/- 20% compared to the folded state. Alternatively or additionally, a film web 3 having two folds 10 can have an increased width in the unfolded state in the unfolded regions of 10 cm +/- 20% compared to the folded state.

The increased width of the film web 3 can be used to increase the distance between the underside 6 of the central region 7 of the film web 3 and the upper 11 of the crown 4 of the asparagus bed 2.

By unfolding the film reservoir 9, the spacing between the underside 6 and the upper side 11 can ultimately be increased by at least the width of the unfolded film reservoir 9 and/or by the width 20 of the at least one fold 10.

Not shown is that the width of the cover 1 with folded-in film reservoir 9 is at least 1.0 m, preferably between 1.4 m to 1.6 m.

Furthermore, it is not shown that the length of the cover 1 is at least 30 m or that the film web 3 can be rolled up or provided to the user as a roll.

Fig. 1 shows that the film web 3 is folded over on itself along each of its longitudinal edges 23, the two folded-over areas 24 each forming pockets 25 which can be filled with filling material. The pockets 25 may be formed between joints 26, in particular welds 26.

The joints 26 are shown schematically in Figs. 7 and 8, where they are designed in particular as T-shaped welded connections. The T-shaped welded joints 26 have a part running at least substantially in the longitudinal direction L of the film web 3 and a part running at least substantially transversely to the longitudinal direction L of the film web 3. The part of the joint 26 extending at least substantially in the longitudinal direction L faces in particular the central region 7. The part of the joint 26 running transversely to the longitudinal direction L can directly adjoin the part running in the longitudinal direction L and in particular project to the outer edge of the cover 1.

The pockets 26 can be filled with filling material such as water, sand and/or soil, in particular when the film web 3 has been placed on the asparagus bed 2. The filling material can be used to weigh down the edges of the film web 3 so that it cannot slip unintentionally or fly away in strong winds, especially when in use.

The film web 3 can have an absorbent side or reflective side which forms the underside 6 or the top side 28 of the film web 3. It is not shown that the film web 3 has both a reflective side and an absorbent side. Further, it is not shown that the film web 3 can also be used in such a way that the film web 3 can be turned to the desired side in each case so that the absorbent side or the reflective side of the film web 3 can form in the state of use the top side 28.

The absorbent side can be dark, grey, dark grey, green, brown, and/or black, wherein the reflective side can be white or at least substantially white.

Further, it is not shown that the folds 10 or the film reservoir 9 can be designed in such a way that the reversibility of the film web 3 can be ensured without further ado, so that the reflective or the absorbent side can form the top side 28 - depending on the weather conditions.

In particular, the unfolding behavior of the film reservoir 9 can be achieved in any state of use - regardless of whether the absorbent or the reflective side of the film web 3 forms the top side 28 in the state of use.

Fig. 1 shows the use of a cover 1 according to one of the aforementioned embodiments for covering an asparagus bed 2 and/or for placing on an asparagus bed 2.

### List of reference signs:

- 1: Cover
- 2: Asparagus bed
- 3: Film web
- 4: Crown
- 5: Side surface
- 6: Underside of 3
- 7: Central region of 3
- 8: Side region from 3
- 9: Film reservoir
- 10: Fold
- 11: Upper side of 4
- 12: Asparagus spear
- 13: Asparagus head
- 14: Fold leg
- 15: Connecting region
- 16: Fold end
- 17: Fold width
- 18: Spacing
- 19: Spacing
- 20: Width
- 21: Fold section
- 22: End of 21
- 23: Longitudinal edge
- 24: Folded-over area
- 25: Pockets
- 26: Joint
- 27: Welding line
- 28: Top side of 3
- 29: Fold start

- L: Longitudinal direction from 3
- T: Transverse direction of 3

## Claims

1. Cover (1) comprising a film web (3) intended to be placed on an asparagus bed (2), wherein in the placed state of the cover (1) the underside (6) of the central region (7) of the film web (3) at least partially faces the crown (4) of the asparagus bed (2) and the undersides (6) of the side regions (8) of the film web (3) are provided for at least partial placement on the side surfaces (5) of the asparagus bed (2),
wherein the film web (3) has a film reservoir (9) with at least one fold (10), so that, when the cover (1) is placed on the asparagus bed (2), in the at least partially unfolded state of the fold (10), a spacing of the underside (6) of the central region (7) of the film web (3) from the crown (4) results,
wherein a plurality of in particular at least substantially equally spaced connecting regions (15) is provided over the length of the at least one fold (10), and
wherein the connection regions (15) comprise at least one welding line,
**characterised in that**
for at least one fold (10), preferably for all folds (10), at least two fold legs (14) of the fold (10) facing one another, preferably all fold legs (14) of one fold (10), are firmly connected, preferably welded, to one another via at least one connecting region (15).

2. Cover according to claim 1, **characterized in that** the fold (10) extends in the longitudinal and/or transverse (L, T) direction of the film web (3) and/or that the fold (10) running in the longitudinal direction (L) of the film web (3) extends over the entire length of the film web (3) and/or that the fold (10) running in the transverse direction (T) of the film web (3) extends over the entire width of the film web (3).

3. Cover according to claim 1 or 2, **characterized in that** the film reservoir (9) has at least two folds (10) running at least substantially parallel to one another in the longitudinal direction (L) of the film web (3).

4. Cover according to one of the preceding claims, **characterized in that** a plurality of folds (10) is provided.

5. Cover according to one of the preceding claims, **characterized in that** a fold (10) comprises at least three fold legs (14), in particular wherein the fold legs (14) have the same width and/or length.

6. Cover according to one of the preceding claims, **characterized in that** the spacing (18) of adjacent connecting regions (15) is at least 10 cm, and is preferably between 30 to 300 cm and further preferably between 50 to 200 cm.

7. Cover according to one of the preceding claims, **characterized in that** the welding line (27) is arranged transverse, oblique and/or inclined to the longitudinal direction (L) and/or to the transverse direction (T) and/or **in that** the welding line (27) has a wave shape and/or an arc shape.

8. Cover according to one of the preceding claims, **characterized in that** the welding line (27) of the connecting region (15) is designed continuous, partial and/or dotted over the fold width (17).

9. Cover according to one of the preceding claims, **characterized in that** the fold ends (16) of at least two directly adjacent longitudinal folds (10) face towards or away from each other and/or that a fold line is provided at the fold end (16) of a fold (10).

10. Cover according to one of the preceding claims, **characterized in that** the width (20) of the fold (10) is at least 2 cm, preferably between 3 to 30 cm, more preferably between 5 to 20 cm, and/or **in that** the film reservoir (9) is formed in such a way that by unfolding the film reservoir (9) the distance between the underside (6) of the central region (7) of the film web (3) and the upper side (11) of the crown (4) of the asparagus bed (2) is increased by at least 2 cm, preferably between 3 to 30 cm, more preferably between 5 to 20 cm.

11. Cover according to one of the preceding claims, **characterized in that** the fold (10) or at least one fold (10) is formed as a double fold with two fold sections (21) and that, preferably, the ends (22) of the fold sections (21) point in opposite directions.

12. Cover according to one of the preceding claims, **characterized in that** the width of the cover (1) with folded-in film reservoir (9) is at least 1 m, preferably between 1.1 m to 3,0 m, more preferably between 1.4 to 1.6 m, and/or **in that** the length of the cover (1) is at least 30 m and/or **in that** the film web (3) is folded over on itself along its two longitudinal edges in each case and the two folded-over regions (24) in each case form pockets (25) which can be filled with filling material.

13. Use of a cover (1) according to one of the proceeding claims for covering and/or placing on an asparagus bed (2).

## Patentansprüche

1. Abdeckung (1) mit einer Folienbahn (3), die zum Auflegen auf ein Spargelbeet (2) vorgesehen ist, wobei im aufgelegten Zustand der Abdeckung (1) die Unterseite (6) des mittleren Bereichs (7) der Folienbahn (3) zumindest teilweise der Krone (4) des Spargelbeetes (2) zugewandt ist und die Unterseiten (6) der Seitenbereiche (8) der Folienbahn (3) zum zumindest teilweisen Auflegen auf die Seitenflächen (5) des Spargelbeetes (2) vorgesehen sind,
wobei die Folienbahn (3) ein Folienreservoir (9) mit mindestens einer Falte (10) aufweist, so dass sich beim Auflegen der Abdeckung (1) auf das Spargelbeet (2) im zumindest teilweise entfalteten Zustand der Falte (10) ein Abstand der Unterseite (6) des mittleren Bereichs (7) der Folienbahn (3) von der Krone (4) ergibt,
wobei über die Länge der mindestens einen Falte (10) eine Vielzahl von insbesondere zumindest im Wesentlichen gleich beabstandeten Verbindungsbereichen (15) vorgesehen ist, und
wobei die Verbindungsbereiche (15) mindestens eine Schweißlinie (27) aufweisen.
**dadurch gekennzeichnet, dass**
für mindestens eine Falte (10), vorzugsweise für alle Falten (10), mindestens zwei einander zugewandte Faltschenkel (14) der Falte (10), vorzugsweise alle Faltschenkel (14) einer Falte (10), über mindestens einen Verbindungsbereich (15) fest miteinander verbunden, vorzugsweise verschweißt sind.

2. Abdeckung nach Anspruch 1 , **dadurch gekennzeichnet, dass** sich die Falte (10) in Längs- und/oder Querrichtung (L, T) der Folienbahn (3) erstreckt und/oder dass sich die in Längsrichtung (L) der Folienbahn (3) verlaufende Falte (10) über die gesamte Länge der Folienbahn (3) erstreckt und/oder dass sich die in Querrichtung (T) der Folienbahn (3) verlaufende Falte (10) über die gesamte Breite der Folienbahn (3) erstreckt.

3. Abdeckung nach Anspruch 1 oder 2, **dadurch gekennzeichnet, dass** das Folienreservoir (9) mindestens zwei in Längsrichtung (L) der Folienbahn (3) zumindest im Wesentlichen parallel zueinander verlaufende Falten (10) aufweist.

4. Abdeckung nach einem der vorhergehenden Ansprüche, **dadurch gekennzeichnet, dass** eine Vielzahl von Falten (10) vorgesehen ist.

5. Abdeckung nach einem der vorhergehenden Ansprüche, **dadurch gekennzeichnet, dass** eine Falte (10) mindestens drei Faltenschenkel (14) aufweist, insbesondere wobei die Faltenschenkel (14) die gleiche Breite und/oder Länge aufweisen.

6. Abdeckung nach einem der vorhergehenden Ansprüche, **dadurch gekennzeichnet, dass** der Abstand (18) benachbarter Verbindungsbereiche (15) mindestens 10 cm, vorzugsweise zwischen 30 und 300 cm und weiter bevorzugt zwischen 50 und 200 cm beträgt.

7. Abdeckung nach einem der vorhergehenden Ansprüche, **dadurch gekennzeichnet, dass** die Schweißlinie (27) quer, schräg und/oder geneigt zur Längsrichtung (L) und/oder zur Querrichtung (T) angeordnet ist und/oder dass die Schweißlinie (27) eine Wellenform und/oder eine Bogenform aufweist.

8. Abdeckung nach einem der vorhergehenden Ansprüche, **dadurch gekennzeichnet, dass** die Schweißlinie (27) des Verbindungsbereichs (15) über die Faltenbreite (17) durchgehend, unterbrochen und/oder punktiert ausgebildet ist.

9. Abdeckung nach einem der vorhergehenden Ansprüche, **dadurch gekennzeichnet, dass** die Faltenenden (16) von mindestens zwei unmittelbar benachbarten Längsfaltungen (10) einander zu- oder abgewandt sind und/oder dass am Faltenende (16) einer Falte (10) eine Falzlinie vorgesehen ist.

10. Abdeckung nach einem der vorhergehenden Ansprüche, **dadurch gekennzeichnet, dass** die Breite (20) der Falte (10) mindestens 2 cm, vorzugsweise zwischen 3 und 30 cm, besonders bevorzugt zwischen 5 und 20 cm beträgt, und/oder dass das Folienreservoir (9) so ausgebildet ist, dass durch Entfalten des Folienreservoirs (9) der Abstand zwischen der Unterseite (6) des mittleren Bereichs (7) der Folienbahn (3) und der Oberseite (11) der Krone (4) des Spargelbeetes (2) um mindestens 2 cm, vorzugsweise zwischen 3 bis 30 cm, besonders bevorzugt zwischen 5 bis 20 cm, vergrößert wird.

11. Abdeckung nach einem der vorhergehenden Ansprüche, **dadurch gekennzeichnet, dass** die Falte (10) oder mindestens ein Falte (10) als Doppelfalte mit zwei Faltabschnitten (21) ausgebildet ist und dass vorzugsweise die Enden (22) der Faltabschnitte (21) in entgegengesetzte Richtungen weisen.

12. Abdeckung nach einem der vorhergehenden Ansprüche, **dadurch gekennzeichnet, dass** die Breite der Abdeckung (1) mit eingefaltetem Folienreservoir (9) mindestens 1 m, vorzugsweise zwischen 1,1 m und 3,0 m, besonders bevorzugt zwischen 1,4 und 1,6 m, beträgt und/oder dass die Länge der Abdeckung (1) mindestens 30 m beträgt und/oder dass die Folienbahn (3) entlang ihrer beiden Längskanten jeweils auf sich selbst umgeschlagen ist und die beiden umgeschlagenen Bereiche (24) jeweils Taschen (25) bilden, die mit Füllmaterial befüllbar sind.

13. Verwendung einer Abdeckung (1) nach einem der vorhergehenden Ansprüche zum Abdecken und/oder Auflegen auf ein Spargelbeet (2).

## Revendications

1. Couverture (1) comprenant une bande de film (3) destinée à être placée sur un lit d'asperges (2), dans laquelle, à l'état placé de la couverture (1), le dessous (6) de la région centrale (7) de la bande de film (3) fait au moins partiellement face à la couronne (4) du lit d'asperges (2) et les dessous (6) des régions latérales (8) de la bande de film (3) sont prévus pour un placement au moins partiel sur les surfaces latérales (5) du lit d'asperges (2),
dans laquelle la bande de film (3) a un réservoir de film (9) avec au moins un pli (10), de sorte que, lorsque la couverture (1) est placée sur le lit d'asperges (2), dans l'état au moins partiellement déplié du pli (10), il en résulte un espacement de du dessous (6) de la région centrale (7) de la bande de film (3) par rapport à la couronne (4),
dans laquelle une pluralité de régions de connexion (15), en particulier au moins sensiblement également espacées, est prévue sur la longueur d'au moins un pli (10), et
dans laquelle les zones de connexion (15) comprennent au moins une ligne de soudure (27).
**caractérisé en ce que**
pour au moins un pli (10), de préférence pour tous les plis (10), au moins deux pattes de pli (14) du pli (10) se faisant face, de préférence toutes les pattes de pli (14) d'un pli (10), sont fermement reliées, de préférence soudées, l'une à l'autre par l'intermédiaire d'au moins une zone de connexion (15).

2. Couverture selon la revendication 1, **caractérisée en ce que** le pli (10) s'étend dans la direction longitudinale et/ou transversale (L, T) de la bande de film (3) et/ou **en ce que** le pli (10) s'étendant dans la direction longitudinale (L) de la bande de film (3) s'étend sur toute la longueur de la bande de film (3) et/ou **en ce que** le pli (10) s'étendant dans la direction transversale (T) de la bande de film (3) s'étend sur toute la largeur de la bande de film (3).

3. Couverture selon la revendication 1 ou 2, **caractérisée en ce que** le réservoir de film (9) présente au moins deux plis (10) au moins sensiblement parallèles l'un à l'autre dans la direction longitudinale (L) de la bande de film (3).

4. Couverture selon l'une des revendications précédentes, **caractérisée en ce qu'**une pluralité de plis (10) est prévue.

5. Couverture selon l'une des revendications précédentes, **caractérisée en ce qu'**un pli (10) comprend au moins trois pattes de pliage (14), en particulier lorsque les pattes de pli (14) ont la même largeur et/ou la même longueur.

6. Couverture selon l'une des revendications précédentes, **caractérisée par** en ce que l'espacement (18) des zones de connexion (15) adjacentes est d'au moins 10 cm, et est de préférence compris entre 30 et 300 cm, et de préférence encore entre 50 et 200 cm.

7. Couverture selon l'une des revendications précédentes, **caractérisée en ce que** la ligne de soudure (27) est disposée transversalement, obliquement et/ou inclinée par rapport à la direction longitudinale (L) et/ou à la direction transversale (T) et/ou **en ce que** la ligne de soudure (27) a une forme d'onde et/ou une forme d'arc.

8. Couverture selon l'une des revendications précédentes, **caractérisée en ce que** la ligne de soudure (27) de la zone de connexion (15) est conçue de manière continue, partielle et/ou en pointillés sur la largeur du pli (17).

9. Couverture selon l'une des revendications précédentes, **caractérisée en ce que** les extrémités des plis (16) d'au moins deux plis longitudinaux (10) directement adjacents se font face ou s'éloignent l'un de l'autre et/ou **en ce qu'**une ligne de pliage est prévue à l'extrémité (16) d'un pli (10).

10. Couverture selon l'une des revendications précédentes, **caractérisée en ce que** la largeur (20) du pli (10) est d'au moins 2 cm, de préférence entre 3 et 30 cm, plus préférentiellement entre 5 et 20 cm, et/ou **en ce que** le réservoir de film (9) est formé de telle sorte qu'en dépliant le réservoir de film (9), la distance entre la face inférieure (6) de la région centrale (7) de la bande de film (3) et la face supérieure (11) de la couronne (4) du lit d'asperges (2) est augmentée d'au moins 2 cm, de préférence entre 3 et 30 cm, plus préférentiellement entre 5 et 20 cm.

11. Couverture selon l'une des revendications précédentes, **caractérisée en ce que** le pli (10) ou au moins un pli (10) est formé d'un double pli avec deux sections de pli (21) et que, de préférence, les extrémités (22) des sections de pli (21) sont orientées dans des directions opposées.

12. Couverture selon l'une des revendications précédentes, **caractérisée en ce que** la largeur de la couverture (1) avec le réservoir de film (9) replié est d'au moins 1 m, de préférence entre 1,1 m et 3,0 m, plus préférentiellement entre 1,4 et 1,6 m, et/ou **en ce que** la longueur de la couverture (1) est d'au moins 30 m et/ou **en ce que** la bande de film (3) est repliée sur elle-même le long de ses deux bords longitudinaux dans chaque cas et que les deux régions repliées (24) forment dans chaque cas des poches (25) qui peuvent être remplies avec du matériau de remplissage.

13. Utilisation d'une couverture (1) selon l'une des revendications précédentes pour couvrir et/ou placer sur un lit d'asperges (2).
